(19) Europäisches Patentamt
European Patent Office
Office européen des brevets

(11) **EP 1 783 606 A1**

(12) **EUROPÄISCHE PATENTANMELDUNG**

(43) Veröffentlichungstag:
**09.05.2007 Patentblatt 2007/19**

(51) Int Cl.:
*G06F 9/46* (2006.01)    *G06F 11/22* (2006.01)

(21) Anmeldenummer: **05020934.5**

(22) Anmeldetag: **26.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Sevenval AG**
**50667 Köln (DE)**

(72) Erfinder: **Sponagl, Paul**
**50733 Köln (DE)**

(74) Vertreter: **Dendorfer, Claus et al**
**Dendorfer & Herrmann**
**Patentanwälte Partnerschaft**
**Bayerstrasse 3**
**80335 München (DE)**

(54) **Virtuelles Bereitstellen eines datenverarbeitenden Gerätes**

(57) Bei einem Verfahren zum virtuellen Bereitstellen eines datenverarbeitenden Gerätes (18) eines vorgegebenen Typs über ein Computernetz (12), wobei ein reales Gerät (26) des vorgegebenen Typs verwendet wird, wird eine erste Nachricht (56) mit einer Anweisung (58) zur Bedienung des Geräts (26) von einem externen Benutzerrechner (14) über das Computernetz (12) empfangen, das Gerät (26) wird in Abhängigkeit von der Bedienanweisung automatisch bedient, eine Ausgabe des Gerätes (26) wird abgetastet, und eine zweite Nachricht (60) wird in Abhängigkeit von der Ausgabe über das Computernetz (12) an den externen Benutzerrechner (14) gesendet. Eine Vorrichtung weist entsprechende Merkmale auf. Die Erfindung ermöglicht die virtuelle Bereitstellung eines Gerätes (18), das möglichst weitgehend einem realen Gerät (26) des vorgegebenen Typs entspricht.

Fig. 1

EP 1 783 606 A1

**Beschreibung**

Die Erfindung betrifft allgemein das Gebiet des virtuellen Bereitstellens von datenverarbeitenden Geräten. Virtuell bereitgestellte Geräte werden für viele Anwendungsgebiete benötigt, insbesondere zum Test und für die Qualitätssicherung von Programmen und Daten, die von den Geräten ausgeführt beziehungsweise verarbeitet werden.

Eines der möglichen Anwendungsgebiete der Erfindung ist die Qualitätssicherung von Informations- und Unterhaltungsseiten, die zur Darstellung durch Mobilgeräte vorgesehen sind. Solche Mobilgeräte können beispielsweise Mobiltelefone oder persönliche digitale Assistenten (PDAs) sein, die über eine Funkschnittstelle zur Datenübertragung und einen WAP-Browser (WAP = *Wireless Access Protocol)* oder ein ähnliches Darstellungsprogramm verfügen.

Die bei den unterschiedlichen Gerätetypen eingesetzten Browser unterscheiden sich jedoch voneinander. Insbesondere werden vorgegebene Seiten bei unterschiedlichen Gerätetypen in der Regel unterschiedlich dargestellt, weil sich die Bildschirmgrößen und die verwendeten Verfahren zur Anpassung einer Seite an das Bildschirmformat unterscheiden. Für den Anbieter der Informations- und Unterhaltungsseiten ist es deshalb wichtig, die angebotenen Seiten zur Qualitätssicherung laufend daraufhin zu überprüfen, ob sie auf Geräten unterschiedlicher Typen korrekt angezeigt werden.

Für diverse Mobilgeräte sind Emulatoren bekannt, die z.B. von einem üblichen Computer ausgeführt werden und die für die gerade erwähnte Qualitätssicherung eingesetzt werden können. Hier besteht aber das Problem, dass Emulatoren das Verhalten eines realen Geräts nie exakt wiedergeben. In der Praxis hat sich gezeigt, dass insbesondere bei Geräten mit kurzen Produktzyklen - wie dies z.B. bei Mobilgeräten der Fall ist - das Verhalten üblicher Emulatoren erheblich von dem realen Geräteverhalten abweicht. Es besteht daher ein Bedürfnis nach einer Technik, durch die sich diese Abweichungen vermeiden lassen.

Die Qualitätssicherung kann auch manuell unter Verwendung realer Geräte durchgeführt werden. Dies ist jedoch sehr aufwändig, weil jeder Anbieter von informations- und Unterhaltungsseiten eine Sammlung der wichtigsten am Markt befindlichen Geräte erwerben und laufend auf dem neuesten Stand halten muss. Überdies ist das Bedienen der Geräte - z.B. die manuelle Eingabe von Seitenadressen über eine Zifferntastatur - mühsam und zeitaufwändig. Es besteht daher ein Bedürfnis, den für die Qualitätssicherung erforderlichen Aufwand möglichst weitgehend zu verringern.

Die Erfindung hat die Aufgabe, eine Technik zum virtuellen Bereitstellen eines datenverarbeitenden Gerätes eines vorgegebenen Typs zu schaffen, bei der das virtuell bereitgestellte Gerät möglichst weitgehend einem realen Gerät des vorgegebenen Typs entspricht. In manchen Ausführungsformen hat die Erfindung ferner die Aufgabe, eine kostengünstige Nutzung des virtuell bereitgestellten Gerätes zu ermöglichen. In weiteren Ausführungsformen hat die Erfindung ferner die Aufgabe, eine bequeme Bedienung des virtuell bereitgestellten Gerätes zu ermöglichen.

Erfindungsgemäß wird die oben genannte Aufgabe ganz oder zum Teil gelöst durch ein Verfahren zum virtuellen Bereitstellen eines Gerätes mit den Merkmalen des Anspruchs 1, eine Verwendung des Verfahrens gemäß Anspruch 17 und eine Vorrichtung mit den Merkmalen des Anspruchs 18. Die abhängigen Ansprüche definieren optionale Markmale mancher Ausgestaltungen der Erfindung.

Die Erfindung geht von der Grundidee aus, statt einer softwaregestützten Emulation ein reales Gerät des vorgegebenen Typs zu verwenden, das über ein Computernetz virtuell bereitgestellt wird. Das reale Gerät wird hierbei durch eine automatische Bedieneinrichtung bedient, und die Ausgaben des Geräts werden durch eine Abtasteinrichtung abgetastet. Über das Computernetz werden Anforderungen zur Bedienung des Geräts und Antworten, die auf der Reaktion des Gerätes beruhen, übermittelt. Im vorliegenden Dokument wird als "Typ" des Geräts die genaue Ausgestaltung des Geräts angesehen, wie sie üblicherweise durch die Hersteller- und Typenbezeichnung (z.B. "Mobiltelefon Siemens MC 60") angegeben wird.

Dadurch, dass erfindungsgemäß ein reales Gerät des vorgegebenen Typs verwendet wird, werden die bei Emulatoren üblichen Unterschiede zwischen dem emulierten und dem realen Geräteverhalten vermieden. Weil das virtuelle Gerät erfindungsgemäß über ein Computernetz bereitgestellt wird, kann es problemlos von mehreren unterschiedlichen Benutzern verwendet werden. Beispielsweise kann ein einziges reales Gerät zur Qualitätssicherung für die Informations- und Unterhaltungsseiten einer Reihe von Anbietern dienen. Die auf die einzelnen Anwender entfallenden Kosten für die Anschaffung und laufende Erneuerung des Geräteparks verringern sich dadurch beträchtlich, und es kann eine größere Vielfalt von Gerätetypen bereitgehalten werden.

Ferner schafft die Verwendung einer automatischen Bedieneinrichtung die technische Grundlage für eine komfortable Gerätebedienung. Dies gilt insbesondere im Zusammenhang mit kompakten Mobilgeräten, die in der Regel relativ wenige, dafür aber mehrfach belegte Eingabetasten aufweisen. Beispielsweise kann das reale Gerät mit höchstens 25 Eingabetasten ausgestattet sein. Die automatische Bedieneinrichtung der vorliegenden Erfindung kann dann in manchen Ausgestaltungen zur Eingabe eines einzigen alphanumerischen Zeichens eine Folge mehrerer Tastendrücke automatisch ausführen. Dies erleichtert z.B. die Eingabe von Adressen für anzuzeigende Informations- und Unterhaltungsseiten erheblich. Auf ähnliche Weise wird in manchen Ausgestaltungen eine Funktionalität zum automatischen Eingeben von Tastensequenzen in Reaktion auf einen Aufruf eines Makros bereitgestellt.

Allgemein kann die Erfindung für Geräte mit jeder Art von Bedienelementen eingesetzt werden, die mechanisch

EP 1 783 606 A1

und/oder optisch und/oder akustisch und/oder elektrisch bedienbar sind. Insbesondere eignet sich die Erfindung zur Verwendung bei Geräten, die keine herstellerübergreifend standardisierte elektrische Bedienschnittstelle aufweisen.

Die Bedieneinrichtung kann in manchen Ausgestaltungen der Erfindung eine normalerweise durch den Benutzer erfolgende mechanische und/oder optische und/oder akustische Bedienung des Gerätes simulieren. In anderen Ausgestaltungen ist - alternativ oder zusätzlich - vorgesehen, dass die Bedieneinrichtung auf interne Bauelemente des Gerätes einwirkt, die nur durch einen Eingriff in das Gerät zugänglich sind. Beispielsweise kann die Bedieneinrichtung elektrische Schaltelemente beinhalten, die an interne Tastenkontakte des Gerätes angeschlossen sind und diese elektrisch zu überbrücken vermögen. Da die internen Tastenkontakte des Gerätes normalerweise nicht von außen zugänglich sind, ist eine solche Bedienung mit einem Eingriff in das Gerät verbunden.

In manchen Ausgestaltungen werden Tasten des realen Gerätes durch mindestens einen Aktuator mechanisch betätigt. Der Aktuator kann ortsfest sein und genau eine Taste bedienen, oder er kann mechanisch in einer oder zwei Achsen quer zur Tastenbetätigungsrichtung bewegbar sein und zur Betätigung mehrerer Tasten - in manchen Ausführungsformen sogar mehrerer Geräte - eingesetzt werden.

Die Abtasteinrichtung ist allgemein ein mechanischer und/oder optischer und/oder akustischer Sensor, der Ausgaben des realen Gerätes aufnimmt. In manchen Ausgestaltungen weist die Abtasteinrichtung eine elektronische Kamera auf, die auf eine Bildschirmanzeige des realen Gerätes gerichtet ist. Das von der Kamera aufgenommene Bild kann in unterschiedlichen Ausführungsformen dem Benutzer angezeigt und/oder automatisch analysiert werden. Bei der Analyse kann z.B. festgestellt werden, ob sich die Ausgabe auf dem Bildschirm geändert hat, oder ob die Bildschirmanzeige einen vorgegebenem Muster entspricht. Bei einer akustischen Abtastung kann der vom realen Gerät ausgegebene Schall dem Benutzer wiedergegeben und/oder automatisch analysiert werden. Auch eine haptische Abtastung und Ausgabe an den Benutzer - z.B. über einen Bewegungssensor und Datenhandschuh - ist möglich und in manchen Ausführungsformen vorgesehen.

In manchen Ausgestaltungen der Erfindung erfolgt der Datenaustausch zwischen der erfindungsgemäßen Vorrichtung und dem Benutzerrechner über das Internet oder ein Intranet. Hierzu können z.B. die an sich bekannten Protokolle HTTP und/oder TCP/IP verwendet werden.

Die erfindungsgemäß vorgesehene erste und zweite Nachricht können in manchen Ausführungsformen in einer Kausalbeziehung zueinander stehen, so dass der Empfang der ersten Nachricht das Senden der zweiten Nachricht auslöst. Dies ist insbesondere dann der Fall, wenn die erste Nachricht eine Anforderung *(request)* und die zweite Nachricht eine zugehörige Antwort *(response)* ist.

In anderen Ausgestaltungen kann die Kausalbeziehung umgekehrt verlaufen, so dass also die zweite Nachricht eine zukünftige erste Nachricht auslöst. In wieder anderen Ausgestaltungen können die ersten und zweiten Nachrichten unabhängig voneinander übermittelt werden. Insbesondere kann vorgesehen sein, einen kontinuierlichen Strom von zweiten Nachrichten - z.B. eine Bilderfolge *(streaming video)* oder einen Audiokanal *(streaming audio)* - zum externen Benutzerrechner zu senden. Auf diese Weise können auch Zustandsänderungen oder Ausgaben des Geräts an den Benutzerrechner übermittelt werden, die nicht oder nicht unmittelbar von einer Bedienaktion ausgelöst wurden.

Bei manchen Ausführungsformen ist eine Funktionalität zum Datenaustausch zwischen dem realen Gerät und einem davon getrennten Teilnehmeridentitätsmodul vorgesehen. Beispielsweise kann das Teilnehmeridentitätsmodul an den Benutzerrechner angeschlossen sein, und die Daten können zwischen dem realen Gerät und dem Teilnehmeridentitätsmodul über das Computernetz übermittelt werden.

Allgemein ist die Erfindung für alle Arten von realen Geräten einsetzbar, z.B. für Mobiltelefone, GPS-Empfänger, Musik-Abspielgeräte, Set-Top-Boxen, stationäre Telefone, Autonavigationssysteme, DVD-Abspielgeräte und so weiter. Besonders sinnvoll ist der Einsatz der Erfindung bei Geräten, die von außen mit Software und/oder Inhalten befüllt werden können. Insbesondere zum Zwecke der Qualitätssicherung ist es wünschenswert, die Programme und/oder Daten und/oder Inhalte anhand mehrerer realer Geräte unterschiedlicher Typen zu überprüfen. In manchen Ausgestaltungen stellt die Erfindung dazu ein "Geräte-Rack" mit einer Mehrzahl realer Geräte bereit, die softwaregesteuert angesprochen werden können.

Die Aufzählungsreihenfolge der Verfahrensschritte in den Ansprüchen soll nicht als einschränkend verstanden werden. Es sind vielmehr Ausgestaltungen der Erfindung vorgesehen, in denen diese Schritte in anderer Reihenfolge oder ineinander verzahnt *(interleaved)* oder parallel ausgeführt werden. In vielen Ausgestaltungen werden die Verfahrensschritte wiederholt - z.B. in Art einer Endlosschleife - ausgeführt.

Die erfindungsgemäße Verwendung sowie die erfindungsgemäße Vorrichtung sind in manchen Ausgestaltungen mit Merkmalen weitergebildet, die den in der vorliegenden Beschreibung oder in den Ansprüchen genannten Merkmalen entsprechen.

Weitere Merkmale, Aufgaben und Vorteile der Erfindung sind aus der folgenden Beschreibung von Ausführungsbeispielen und Ausführungsalternativen ersichtlich. Es wird auf die schematischen Zeichnungen verwiesen, in denen zeigen:

Fig. 1 ein Blockdiagramm eines Systems nach einem Ausführungsbeispiel der Erfindung,

Fig. 2 eine beispielhafte Bildschirmansicht des Benutzerrechners,

Fig. 3 ein Blockdiagramm eines Teils eines Gerätemoduls in einer Ausführungsvariante des in Fig. 1 gezeigten Systems, und

Fig. 4 ein Blockdiagramm einer weiteren Ausführungsvariante des in Fig. 1 gezeigten Systems.

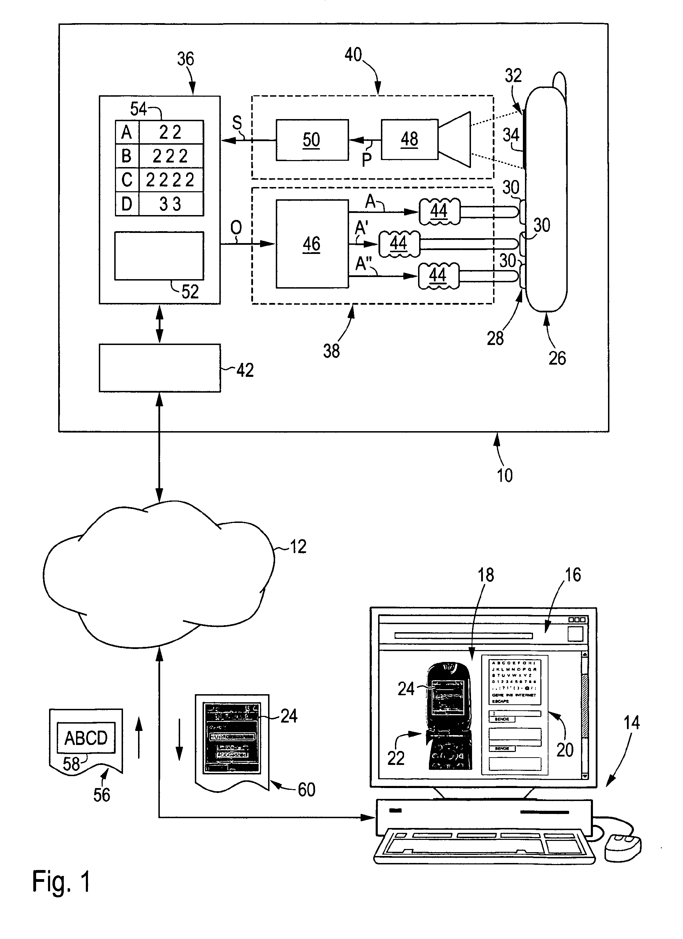

Das in Fig. 1 dargestellte System weist ein Gerätemodul 10 auf, das über ein Computernetz 12 Daten mit einem Benutzerrechner 14 auszutauschen vermag. Das Computernetz 12 ist im vorliegenden Ausführungsbeispiel das Internet. Der Benutzerrechner 14 ist ein üblicher persönlicher Computer, auf dem ein an sich bekannter Browser - z.B. einer der unter den Marken Internet Explorer oder Mozilla Firefox bekannten Browser - ausgeführt wird. In Fig. 1 ist der Browser sinnbildlich durch ein Browserfenster 16 dargestellt, das auf einem Bildschirm des Benutzerrechners 14 angezeigt wird. Insbesondere umfasst das virtuell bereitgestellte Gerät 18 ein Bedienpaneel 20 und eine grafische Gerätedarstellung 22. Die grafische Gerätedarstellung 22 enthält ein Bild 24 eines Gerätebildschirms.

Das Gerätemodul 10 weist ein reales Gerät 26 auf, das hinsichtlich seines Typs dem Typ des virtuell bereitgestellten Geräts 18 entspricht. Im hier beschriebenen Ausführungsbeispiel ist das reale Gerät 26 ein Mobiltelefon, während in Ausführungsalternativen andere Geräte, insbesondere elektronische Mobilgeräte, vorgesehen sein können. Das Gerät 26 weist Bedienelemente 28 auf, die hier in Form eines Tastenfeldes mit mehreren Eingabetasten 30 ausgestaltet sind. Beispielsweise können ungefähr zwanzig Eingabetasten 30 vorgesehen sein, nämlich Zifferntasten, die durch mehrfache Betätigung auch zur Eingabe von Buchstaben und Sonderzeichen dienen, sowie diverse Steuertasten. Ferner weist das Gerät 26 ein Ausgabeelement 32 auf, nämlich in dem hier beschriebenen Ausführungsbeispiel einen grafikfähigen Bildschirm 34.

Das Gerätemodul 10 enthält ferner eine Steuereinrichtung 36, die mit einer Bedieneinrichtung 38, einer Abtasteinrichtung 40 und einer Netzwerkschnittstelle 42 verbunden ist.

Die Bedieneinrichtung 38 spricht auf ein von der Steuereinrichtung 36 ausgegebenes Bediensignal O an und dient zur automatischen Bedienung der Bedienelemente 28. Je nach der Art der Bedienelemente 28 kann das Bedienen mechanische und/oder optische und/oder akustische Vorgänge umfassen. Alternativ oder zusätzlich können auch Bedienvorgänge vorgesehen sein, die mit einem Eingriff in das Gerät 26 verbunden sind, z.B. das Überbrücken von geräteinternen Tastaturkontakten durch elektrische oder elektromechanische Schaltelemente der Bedieneinrichtung 38.

Im vorliegenden Ausführungsbeispiel, bei dem die Bedienelemente 28 Eingabetasten 30 aufweisen, ist eine mechanische Betätigung durch Aktuatoren 44 vorgesehen. Die Aktuatoren 44 werden von einer Ansteuerschaltung 46 angesteuert, die auf das Bediensignal O anspricht und Betätigungssignale A, A', A" für die Aktuatoren 44 erzeugt.

Im vorliegend beschriebenen Ausführungsbeispiel sind die Aktuatoren 44 ortsfest, und jeder Eingabetaste 30 ist genau ein Aktuator 44 zugeordnet, der diese Eingabetaste 30 betätigt. Es sind jedoch auch Ausführungsvarianten mit einem oder mehreren bewegbaren Aktuatoren vorgesehen. Beispielsweise kann in einer solchen Ausführungsvariante ein einziger Aktuator durch eine Bewegungseinrichtung, die zwei Motoren und zwei Seilzüge aufweist, sowohl in X-Richtung als auch in Y-Richtung in einer Ebene parallel zur Vorderseite des Gerätes 26 bewegt werden. Eine derartige Ausgestaltung ist besonders flexibel, weil sie sich softwaregesteuert an die unterschiedlichsten Gerätetypen anpassen lässt. Überdies können bei einer derartigen Ausgestaltung auch berührungssensitive Felder des Bildschirms 34 betätigt werden, ohne den Blick auf den Bildschirm 34 dauerhaft zu versperren.

Auch Ausgestaltungen mit mehreren bewegbaren Aktuatoren sind vorgesehen. Bei solchen Ausführungsformen lassen sich zwei oder mehr Eingabetasten 30 gleichzeitig betätigen. Schließlich sind auch Ausgestaltungen vorgesehen, bei denen ortsfeste Aktuatoren 44 für häufig verwendete Tasten mit bewegbaren Aktuatoren kombiniert werden.

Die Abtasteinrichtung 40 tastet die Ausgabe des Ausgabeelements 32 ab und erzeugt ein entsprechendes Abtastsignal S. Auch hier ist allgemein die Abtasteinrichtung 40 an die Art des abzutastenden Ausgabeelements 32 bzw. der abzutastenden Ausgabeelemente angepasst. Beispielsweise kann eine akustische Ausgabe, z.B. ein Rufsignalton, durch ein Mikrofon abgetastet werden, und/oder es kann eine mechanische Ausgabe, z.B. ein Vibrationsgeber, durch einen entsprechenden Sensor abgetastet werden. Im vorliegend beschriebenen Ausführungsbeispiel ist eine optische Abtastung des Bildschirms 34 durch eine Kamera 48 vorgesehen. Die Kamera 48 kann beispielsweise als einfache CCD-Kamera ausgestaltet sein, die ein Bildsignal P erzeugt. Eine Aufbereitungsschaltung 50 wandelt das Bildsignal P in das der Steuereinrichtung 36 zugeführte Abtastsignal S um.

Die Steuereinrichtung 36 ist in vielen Ausgestaltungen als eingebetteter Computer mit einem Prozessor und Speichermitteln ausgebildet. In Ausführungsalternativen ist die Steuereinrichtung 36 dagegen ein geeignet programmierter PC, der über übliche Schnittstellen mit der Bedieneinrichtung 38 und der Abtasteinrichtung 40 verbunden ist. Die Steuereinrichtung 36 koordiniert die Vorgänge im Gerätemodul 10 und wickelt die Kommunikation mit dem Benutzerrechner 14 über die Netzwerkschnittstelle 42 und das Computernetz 12 ab. Gegenüber dem Benutzerrechner 14 verhält sich das Gerätemodul 10 wie ein Server im *World Wide Web;* die Steuereinrichtung 36 weist dazu ein geeignetes Web-Server-Programm 52 auf, das beispielsweise eine modifizierte Variante des an sich bekannten *Apache HTTP*

*Server* der *Apache Software Foundation* sein kann.

Im Hinblick auf die Bedienung des Gerätes 26 ist die Steuereinrichtung 36 im vorliegenden Ausführungsbeispiel mit einer Funktionalität ausgestattet, die es erlaubt, eine einzige Bedienanweisung in eine Folge mehrerer Tastenbetätigungen umzusetzen. Eine derartige Bedienanweisung kann beispielsweise ein einziges alphanumerisches Zeichen beinhalten, das von der Steuereinrichtung 36 in eine Folge mehrerer Betätigungen einer Zifferntaste des Gerätes 26 umgesetzt wird. Hierzu ist in der Steuereinrichtung 36 eine geeignete, gerätespezifische Umsetztabelle 54 vorgesehen.

Alternativ oder zusätzlich kann die Umsetztabelle 54 einen Bereich für benutzerdefinierbare Einträge aufweisen, wodurch eine Funktionalität zum Ausführen von Makros implementiert wird. Der Benutzer kann dann beispielsweise ein Makro mit dem Namen "Gehe ins Internet" definieren, bei dessen Aufruf eine umfangreiche Sequenz von Tastenbetätigungen durchgeführt wird, um eine Internet-Funktion des Geräts 26 aufzurufen. Auf ähnliche Weise kann z.B. die Eingabe von Web-Adressen oder Benutzernamen/Kennwort-Paaren durch die Verwendung von Makros erheblich vereinfacht werden.

Im Betrieb des in Fig. 1 gezeigten Systems gibt der Benutzer die Web-Adresse des Gerätemoduls 10 in die Adresszeile des Browserfensters 16 ein. Der Benutzerrechner 14 kontaktiert daraufhin das Gerätemodul 10 und zeigt die grafische Gerätedarstellung 22 sowie das Bedienpaneel 20 im Browserfenster 16 an. In diesem Zusammenhang können auch geeignete Skripten oder Applets - z.B. JavaSkript™-Skripten und Java™-Applets - zum Benutzerrechner 14 übertragen und dort ausgeführt werden.

Der Benutzer kann nun über die Tastatur des Benutzerrechners 14 oder durch einen Mausklick auf einen geeigneten Bereich des Bedienpaneels 20 einen Bedienbefehl abgeben. Dieser Befehl wird vom Benutzerrechner 14 - gesteuert durch den Browser und gegebenenfalls zusätzliche Skripten oder Applets - in eine erste Nachricht 56 umgesetzt. Im vorliegenden Ausführungsbeispiel ist diese erste Nachricht 56 eine an das Gerätemodul 10 gerichtete HTTP-Anforderung *(HTTP Request),* die mindestens eine Anweisung 58 zur Bedienung des Geräts 26 enthält. In dem in Fig. 1 gezeigten Beispiel enthält die erste Nachricht 56 die Anweisung 58, die Zeichenkette "ABCD" in das Gerät 26 einzugeben.

Die erste Nachricht 56 wird über das Computernetz und gegebenenfalls weitere Zwischenstationen an das Gerätemodul 10 übertragen und dort von der Steuereinrichtung 36 ausgewertet. Unter Verwendung der Umsetztabelle 54 setzt die Steuereinrichtung 36 die Anweisung 58 in eine Folge von Bediensignalen O um, die den folgenden Tastenbetätigungen entsprechen:

## "2" "2" [Pause] "2" "2" "2" [Pause] "2" "2" "2" "2" [Pause] "3"

Diese Bediensignale O werden von der Ansteuerschaltung 46 in entsprechende Betätigungssignale A, A', A" derjenigen Aktuatoren 44 umgewandelt, die die Eingabetasten 30 mit den Ziffern "2" und "3" bedienen.

Nachdem die automatische Tastenbetätigung abgeschlossen ist, nimmt die Kamera 48 ein Bild der zu diesem Zeitpunkt erfolgenden Bildschirmanzeige des Gerätes 26 auf. Das insgesamt erzeugte Abtastsignal S gibt dieses Bild wieder. Die Steuereinrichtung 36 generiert daraus eine zweite Nachricht 60, die das gerade aufgenommene Bild 24 in einem üblichen Dateiformat enthält. Die zweite Nachricht 60, die im vorliegenden Ausführungsbeispiel eine HTTP-Antwort (HTTP *Response)* ist, wird vom Gerätemodul 10 über das Computernetz 12 an den Benutzerrechner 14 übertragen. Dort wird das Bild 24 in dem Browserfenster 16 angezeigt, und zwar innerhalb der grafischen Gerätedarstellung 22 an derjenigen Stelle, die beim realen Gerät 26 der Position des Bildschirms 34 entspricht. Insgesamt erhält der Benutzer somit eine exakte Rückmeldung der Reaktion des realen Gerätes 26 auf die durchgeführten Bedienungsvorgänge.

Im hier beschriebenen Ausführungsbeispiel wird das von der Abtasteinrichtung 40 im Abtastsignal S bereitgestellte Bild 24 ohne oder mit allenfalls geringer Verarbeitung in die zweite Nachricht 60 aufgenommen. Es sind jedoch auch Ausgestaltungen vorgesehen, bei denen die Abtasteinrichtung 40 und/oder die Steuereinrichtung 36 und/oder der Benutzerrechner 14 eine weitergehende Bildanalyse vornehmen, um beispielsweise einen Grad der Ähnlichkeit des aufgenommenen Bildes 24 mit einer Reihe vorgegebener Darstellungen oder das Fehlen oder Vorhandensein bestimmter Merkmale im Bild 24 und/oder eine Änderung des Bildes 24 automatisch festzustellen. Beispielsweise können Fehlermeldungen oder Fehlersymbole automatisch erkannt werden, so dass dem Benutzer im Browserfenster 16 ein auffälliger Warnhinweis gegeben werden kann. In Ausgestaltungen, bei denen eine derartige Bildanalyse erfolgt, kann die zweite Nachricht 60 nur das Analyseergebnis oder zusätzlich auch das Bild 24 enthalten.

In Ausführungsvarianten ist vorgesehen, dass die Steuereinrichtung 36 eine laufende Folge zweiter Nachrichten mit je einem aktuell aufgenommenen Bild 24 erzeugt und an den Benutzerrechner 14 ausgibt. In derartigen Ausgestaltungen kann der Benutzer die Bildschirmanzeige des Gerätes 26 kontinuierlich - z.B. in Intervallen von 1 Sekunde - kontrollieren, und zwar unabhängig davon, ob erste Nachrichten 56 übermittelt werden oder nicht. In weiteren Ausgestaltungen, bei denen das Bild 24 automatisch auf eine Veränderung des Bildinhalts untersucht wird, kann vorgesehen sein, nach jeder festgestellten Veränderung den neuen Bildinhalt in einer zweiten Nachricht 60 zum Benutzerrechner 14 zu übertragen.

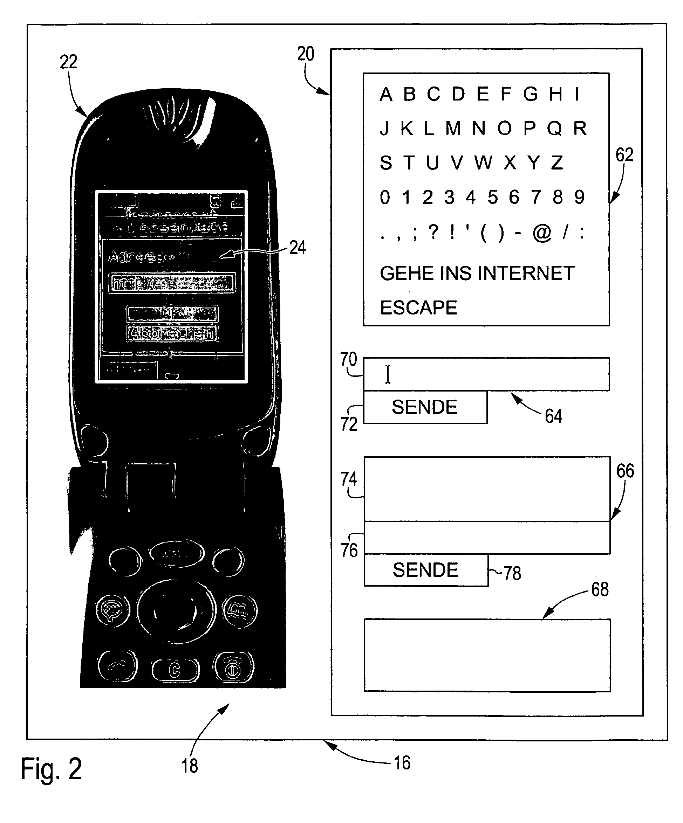

Fig. 2 zeigt eine vergrößerte Darstellung des im Browserfenster 16 virtuell bereitgestellten Gerätes 18. Neben der grafischen Gerätedarstellung 22 und dem eingefügten Bild 24 ist insbesondere das Bedienpaneel 20 genauer gezeigt. Im hier beschriebenen Ausführungsbeispiel weist das Bedienpaneel 20 einen Makroaufrufbereich 62, einen Texteingabebereich 64, einen Makrorekorder 66 und ein Statusausgabefeld 68 auf.

Im Makroaufrufbereich 62 werden die gegenwärtig verfügbaren Makros angezeigt und können durch einen Mausklick des Benutzers aufgerufen werden. Diese Makros umfassen im hier beschriebenen Ausführungsbeispiel sowohl fest vordefinierte Betätigungssequenzen (beispielsweise für einzelne Buchstaben und Sonderzeichen) als auch benutzerdefinierte Makros (beispielsweise ein Makro "Gehe ins Internet"). Wie bereits beschrieben, werden Makroaufrufe von der Steuereinrichtung 36 unter Verwendung der Umsetztabelle 54 aufgelöst und in geeignete Bediensignale O umgesetzt.

Der Texteingabebereich 64 weist ein Texteingabefeld 70 auf, das dem Benutzer zur Eingabe alphanumerischer Zeichenketten zur Verfügung steht. Wenn der Benutzer eine Sendetaste 72 durch einen Mausklick betätigt, wird die eingegebene Zeichenkette als Bedienanweisung an das Gerätemodul 10 gesendet, wie dies oben beispielhaft anhand der Zeichenkette "ABCD" in Anweisung 58 (Fig. 1) erläutert wurde.

Der Makrorekorder 66 stellt zwei Eingabefelder 74, 76 und eine Sendetaste 78 bereit. Der Benutzer gibt Ketten von Bedienbefehlen in das erste Eingabefeld 74 und einen gewünschten Makronamen in das zweite Eingabefeld 76 ein. Wenn der Benutzer die Sendetaste 78 betätigt, werden diese Informationen an das Gerätemodul 10 gesendet und dort in der Umsetztabelle 54 gespeichert. Jedes neu definierte Makro wird im Makroaufrufbereich 62 angezeigt und kann durch einen Mausklick ausgeführt werden.

Das Statusanzeigefeld 68 zeigt mögliche Steuercodes an. Es kann ferner dazu verwendet werden, Informationen über zusätzliche Kommunikationsschnittstellen des Geräts 26 darzustellen. Beispielsweise können im Statusanzeigefeld 68 Ausgaben angezeigt werden, die eine serielle Schnittstelle des Geräts 26 bei jedem Drücken und jedem Loslassen einer Eingabetaste 30 liefert.

Es versteht sich, dass der in Fig. 2 gezeigte Aufbau des Bedienpaneels 20 lediglich als beispielhaft zu verstehen ist, und dass in Ausführungsalternativen andere oder weniger oder zusätzliche Strukturen zur virtuellen Bedienung des Geräts 26 vorgesehen sein können.

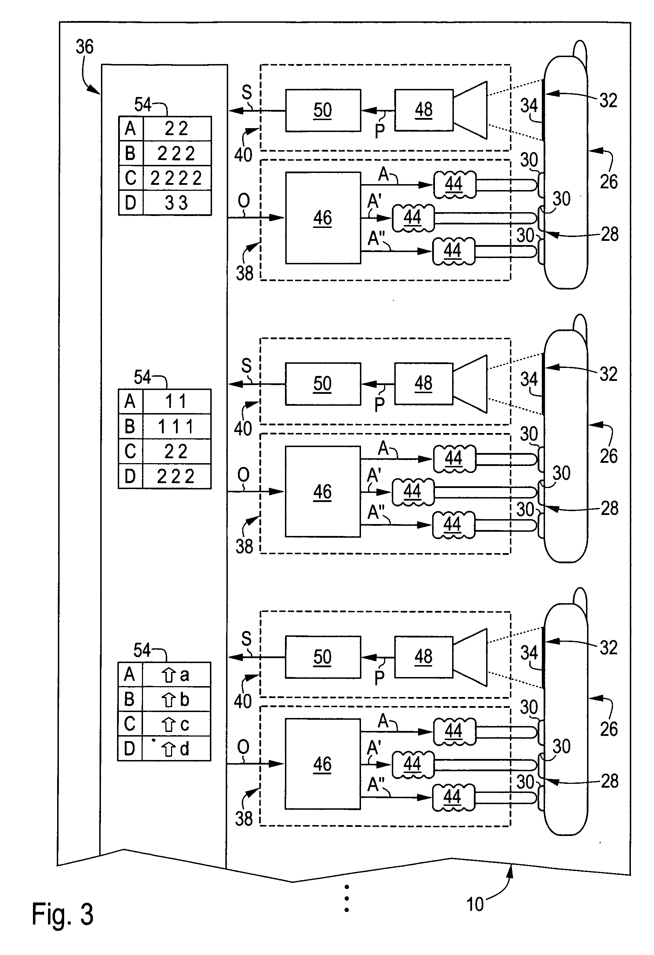

In der schematischen Darstellung von Fig. 1 weist das Gerätemodul 10 ein einziges reales Gerät 26, eine einzige Bedieneinrichtung 38 und eine einzige Abtasteinrichtung 40 auf. Ein derartiges Gerätemodul 10 kann als kompakte Baugruppe in einem geschlossenem Gehäuse ausgestaltet sein. In vielen Anwendungsfällen - z.B. zur Qualitätssicherung von Informations- und Unterhaltungsseiten - ist es jedoch wünschenswert, die zu überprüfenden Seiten von möglichst vielen Geräten 26 der unterschiedlichsten Hersteller und Typen anzeigen zu lassen. Für derartige Anwendungsfälle können mehrere Gerätemodule 10 verwendet werden. In einer in Fig. 3 gezeigten Ausführungsalternative ist dagegen ein einziges Gerätemodul 10 vorgesehen, das mehrere reale Geräte 26 unterschiedlicher Typen enthält.

Das modifizierte Gerätemodul 10 in der Ausgestaltung gemäß Fig. 3 weist eine gemeinsame Steuereinrichtung 36 auf, während für jedes Gerät 26 eine eigene Bedieneinrichtung 38 und eine eigene Abtasteinrichtung 40 vorgesehen sind. Ferner werden gerätespezifische Umsetztabellen 54 verwendet, deren Einträge an die Erfordernisse des jeweiligen Geräts 26 angepasst sind. Die Steuereinrichtung weist ferner ein gemeinsames Web-Server-Programm (in Fig. 3 nicht gezeigt) auf. Jedes einzelne Gerät 26 wird dem Benutzer auf die bereits ausführlich beschriebene Weise in einem Browserfenster (in Fig. 3 nicht gezeigt) virtuell bereitgestellt.

In manchen Ausgestaltungen der Vorrichtung mit mehreren Geräten 26 ist vorgesehen, dass der Benutzer innerhalb einer einzigen Benutzersitzung zwischen den Geräten 26 auswählen und hin und her schalten kann. Hierzu wird dem Benutzer im Browserfenster ein Auswahlpaneel mit je einem Auswahlfeld für jedes zur Verfügung stehende Gerät 26 angezeigt. Alternativ oder zusätzlich kann ein Betriebsmodus angeboten werden, in dem Bedienbefehle des Benutzers parallel an alle zur Verfügung stehenden Geräte 26 geleitet werden. Bei einem derartigen Betriebsmodus ist die Verwendung von Makros besonders wichtig, weil z.B. ein Bedienbefehl "Gehe ins Internet" für jedes Gerät 26 in eine andere Tastendrucksequenz umgesetzt werden muss.

Bei dem in Fig. 3 dargestellten Ausführungsbeispiel ist für jedes Gerät 26 eine eigene Bedieneinrichtung 38 mit ortsfesten Aktuatoren 44 vorgesehen. In einer Ausführungsvariante kann/können dagegen ein bewegbarer Aktuator oder mehrere bewegbare Aktuatoren verwendet werden. Bei einem entsprechend großen Bewegungsbereich kann ein einziger Aktuator zur Bedienung mehrerer Geräte vorgesehen sein und im Extremfall ein ganzes "Geräte-Rack" bedienen. Eine solche Ausgestaltung ist, umgerechnet auf die Anzahl der virtuell bereitgestellten Geräte 18, besonders kostengünstig.

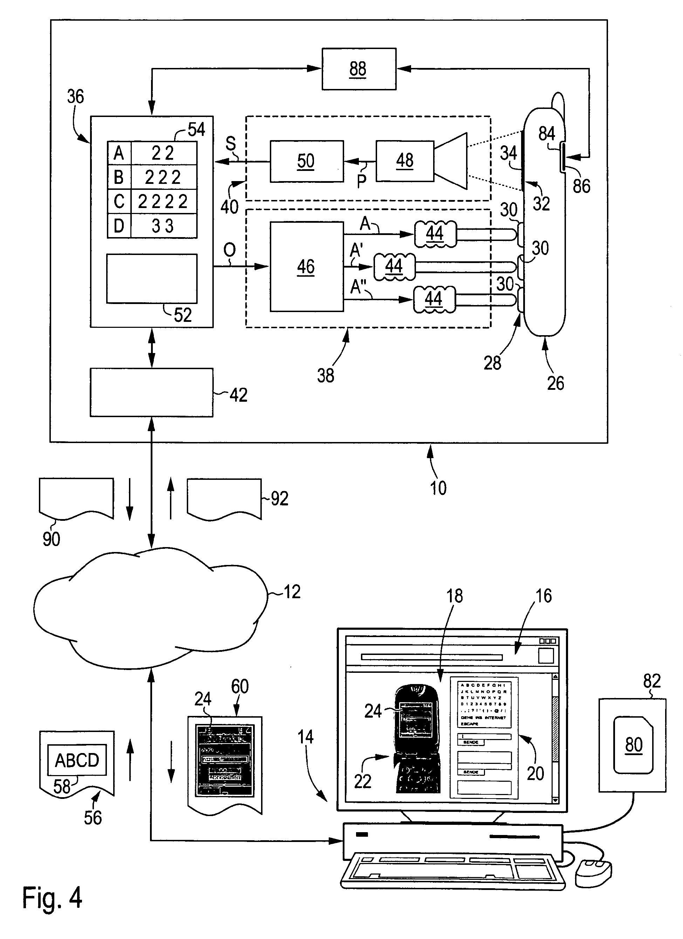

Viele Mobilgeräte wie z.B. Mobiltelefone benötigen zum Betrieb ein Teilnehmeridentitätsmodul, das auch unter der Bezeichnung SIM *(Subscriber Identity Module)* bekannt ist. Das Teilnehmeridentitätsmodul steuert die Authentisierung des Teilnehmers beim Zugriff auf Telekommunikationsnetze und kann Daten und Programme des Dienstanbieters und/oder des Teilnehmers enthalten. In manchen Ausgestaltungen stellt der Betreiber des Gerätemoduls 10 ein geeignetes Teilnehmeridentitätsmodul für das reale Gerät 26 bereit. In Ausführungsalternativen, von denen eine beispielhaft in Fig. 4 gezeigt ist, erhält dagegen der Benutzer die Möglichkeit, ein eigenes Teilnehmeridentitätsmodul am Benutzerrechner 14 zu verwenden.

Bei der Ausgestaltung gemäß Fig. 4 ist ein vom Benutzer bereitgestelltes Teilnehmeridentitätsmodul 80 in ein SIM-Terminal 82 eingelegt. Das SIM-Terminal 82 ist - z.B. über eine USB-Schnittstelle - an den Benutzerrechner 14 angeschlossen. Das reale Gerät 26 weist eine Schnittstelle 84 für ein Teilnehmeridentitätsmodul auf. Statt eines Teilnehmeridentitätsmoduls ist an diese Schnittstelle 84 jedoch eine Kontaktplatte 86 angeschlossen. Die Kontaktplatte 86 ist mit einer Schnittstellenschaltung 88 verbunden, die ihrerseits an die Steuereinrichtung 86 angeschlossen ist.

Im Betrieb werden Daten, die das reale Gerät 26 über die Schnittstelle 84 ausgibt, von der Schnittstellenschaltung 88 und der Steuereinrichtung 36 aufgenommen und in SIM-Anfragen 90 umgewandelt. Jede SIM-Anfrage 90 wird über das Computernetz 12 an den Benutzerrechner 14 gesendet und dort in die ursprünglichen Daten umgewandelt. Diese Daten werden dann über das SIM-Terminal 82 in Form entsprechender Signale an das Teilnehmeridentitätsmodul 80 übertragen. Entsprechend wandeln das SIM-Terminal 82 und der Benutzerrechner 14 Daten, die vom Teilnehmeridentitätsmodul 80 ausgegeben werden, in SIM-Antworten 92 um. Jede SIM-Antwort 92 wird über das Computernetz 12 an das Gerätemodul 10 gesendet und dort von der Steuereinrichtung 36 und der Schnittstellenschaltung 88 in entsprechende Signale umgewandelt, die ihrerseits über die Kontaktplatte 86 in die Schnittstelle 84 der realen Geräts 26 eingespeist werden.

Insgesamt erweitert so die in Fig. 4 gezeigte Ausgestaltung die Funktionalität des virtuell am Benutzerrechner 14 bereitgestellten Geräts 18 um eine SIM-Schnittstelle, die am SIM-Terminal 82 bereitgestellt wird. Es versteht sich, dass diese Erweiterung gemäß Fig. 4 auch bei Gerätemodulen 10 vorgesehen sein kann, die - wie in Fig. 3 gezeigt - mehrere reale Geräte 26 aufweisen. In diesem Fall wird das an den Benutzerrechner 14 angeschlossene Teilnehmeridentitätsmodul 80 bei jedem Gerätewechsel virtuell vom bisherigen Gerät getrennt und mit dem neuen Gerät gekoppelt. Alternativ kann vorgesehen sein, mehrere Teilnehmeridentitätsmodule - z.B. eines für jedes reale Gerät 26 - an den Benutzerrechner 14 anzuschließen.

Viele weitere Kombinationen der Merkmale, die in den obigen Ausführungsbeispielen und im einleitenden Teil der Beschreibung sowie den Zeichnungen dargestellt worden sind, sind möglich und für den Fachmann unmittelbar offensichtlich.

**Patentansprüche**

1. Verfahren zum virtuellen Bereitstellen eines datenverarbeitenden Gerätes (18) eines vorgegebenen Typs über ein Computernetz (12), wobei ein reales Gerät (26) des vorgegebenen Typs verwendet wird, das mechanische und/ oder optische und/oder akustische und/oder elektrische Bedienelemente (28) und mindestens ein mechanisches und/oder optisches und/oder akustisches und/oder elektrisches Ausgabeelement (32) aufweist, mit:

   - Empfangen einer von einem externen Benutzerrechner (14) über das Computernetz (12) gesendeten ersten Nachricht (56) mit einer Anweisung (58) zur Bedienung des Geräts (26),
   - Umsetzen der ersten Nachricht (56) in mindestens ein Bediensignal (O),
   - mechanisches und/oder optisches und/oder akustisches und/oder mit einem Eingriff in das Gerät (26) verbundenes Bedienen mindestens eines der Bedienelemente (28) des Geräts (26) durch eine automatische Bedieneinrichtung (38), die auf das Bediensignal (O) anspricht,
   - Abtasten einer Ausgabe des mindestens einen Ausgabeelements (32) durch eine Abtasteinrichtung (40) zum Erzeugen mindestens eines Abtastsignals (S),
   - Umsetzen des mindestens einen Abtastsignals (S) in eine zweite Nachricht (60), und
   - Senden der zweiten Nachricht (60) über das Computernetz (12) an den externen Benutzerrechner (14).

2. Verfahren nach Anspruch 1, wobei die Bedieneinrichtung (38) mindestens einen auf ein elektrisches Betätigungssignal (A, A', A") ansprechenden Aktuator (44) zur Betätigung mindestens einer Taste (30) des realen Gerätes (26) aufweist.

3. Verfahren nach Anspruch 1, wobei die Bedieneinrichtung (38) eine Mehrzahl von ortsfesten Aktuatoren (44) aufweist, von denen jeder je einer Taste (30) des realen Gerätes (26) zugeordnet ist.

4. Verfahren nach Anspruch 1, wobei die Bedieneinrichtung (38) mindestens einen Aktuator aufweist, der durch eine Bewegungseinrichtung in mindestens einer Richtung hin- und herbewegbar ist und der zur Betätigung mehrerer Tasten (30) des realen Gerätes (26) dient.

5. Verfahren nach Anspruch 1, wobei die Bedieneinrichtung (38) Schaltelemente beinhaltet, die an Tastenkontakte des realen Gerätes (26) angeschlossen sind.

6. Verfahren nach einem der Ansprüche 1 bis 5, wobei das reale Gerät (26) ein elektronisches Mobilgerät ist.

7. Verfahren nach einem der Ansprüche 1 bis 6, wobei das reale Gerät (26) ein Tastenfeld mit höchstens 25 Eingabetasten (30) aufweist.

8. Verfahren nach einem der Ansprüche 1 bis 7, wobei die Bedienung des Geräts (26) alphanumerische Eingaben umfasst, die automatisch in Folgen mehrerer Tastenbetätigungen umgesetzt werden.

9. Verfahren nach einem der Ansprüche 1 bis 8, wobei das reale Gerät (26) einen Bildschirm (34) aufweist und die Abtasteinrichtung (40) mindestens eine auf den Bildschirm (34) gerichtete Kamera (48) aufweist.

10. Verfahren nach Anspruch 9, wobei die zweite Nachricht (60) ein von der Kamera (48) aufgenommenes Bild (24) der Bildschirmanzeige des realen Geräts (26) enthält.

11. Verfahren nach Anspruch 10, wobei der Benutzerrechner (14) in einem Browserfenster (16) eine grafische Darstellung der Bildschirmanzeige des realen Geräts (26) anzeigt.

12. Verfahren nach Anspruch 9, wobei ein von der Kamera (48) aufgenommenes Bild (24) der Bildschirmanzeige des realen Geräts (26) automatisch analysiert wird.

13. Verfahren nach einem der Ansprüche 1 bis 12, wobei die erste Nachricht (56) eine HTTP-Anforderung ist und die zweite Nachricht (60) eine HTTP-Antwort ist.

14. Verfahren nach einem der Ansprüche 1 bis 12, wobei die zweite Nachricht (60) Bestandteil eines laufend gesendeten Datenstroms von zweiten Nachrichten (60) ist.

15. Verfahren nach einem der Ansprüche 1 bis 14, wobei das reale Gerät (26) eine Schnittstelle (84) für ein Teilnehmeridentitätsmodul aufweist, und wobei Daten, die das reale Gerät (26) über diese Schnittstelle (84) sendet und empfängt, über das Computernetz (12) zu einem externen Teilnehmeridentitätsmodul (80) gesendet bzw. von dem externen Teilnehmeridentitätsmodul (80) empfangen werden.

16. Verfahren nach einem der Ansprüche 1 bis 15, wobei mehrere reale Geräte (26) unterschiedlicher Typen wahlweise bereitgestellt werden.

17. Verwendung eines Verfahrens nach einem der Ansprüche 1 bis 16 zur Qualitätssicherung von Programmen und/ oder Daten zur Ausführung beziehungsweise Verarbeitung durch das Gerät (26).

18. Vorrichtung zum virtuellen Bereitstellen eines datenverarbeitenden Gerätes (18) eines vorgegebenen Typs über ein Computernetz (12), die ein reales Gerät (26) des vorgegebenen Typs enthält, das mechanische und/oder optische und/oder akustische und/oder elektrische Bedienelemente (28) und mindestens ein mechanisches und/oder optisches und/oder akustisches und/oder elektrisches Ausgabeelement (32) aufweist, mit:

   - einer Netzwerkschnittstelle (42) zum Empfangen einer von einem externen Benutzerrechner (14) über das Computernetz (12) gesendeten ersten Nachricht (56) mit einer Anweisung (58) zur Bedienung des Geräts (26),
   - einer Steuereinrichtung (36) zum Umsetzen der ersten Nachricht (56) in mindestens ein Bediensignal (O),
   - einer automatischen Bedieneinrichtung (38), die auf das Bediensignal (O) anspricht, zum mechanischen und/ oder optischen und/oder akustischen und/oder mit einem Eingriff in das Gerät (26) verbundenen Bedienen mindestens eines der Bedienelemente (28) des Geräts (26),
   - einer Abtasteinrichtung (40) zum Erzeugen mindestens eines Abtastsignals (S) in Abhängigkeit von einer abgetasteten Ausgabe des mindestens einen Ausgabeelements (32), wobei
   - die Steuereinrichtung (36) ferner zum Umsetzen des mindestens einen Abtastsignals (S) in eine zweite Nachricht (60) eingerichtet ist, und
   - die Netzwerkschnittstelle (42) ferner zum Senden der zweiten Nachricht (60) über das Computernetz (12) an den externen Benutzerrechner (14) eingerichtet ist.

19. Vorrichtung nach Anspruch 18, die zur Ausführung eines Verfahrens nach einem der Ansprüche 1 bis 16 eingerichtet ist.

20. Vorrichtung nach Anspruch 18 oder Anspruch 19, die eine Mehrzahl realer Geräte (26) und mindestens einen bewegbaren Aktuator aufweist, der zur Betätigung von Eingabetasten (30) mehrerer oder aller der Geräte (26) vorgesehen ist.

Fig. 1

EP 1 783 606 A1

Fig. 2

A B C D E F G H I
J K L M N O P Q R
S T U V W X Y Z
0 1 2 3 4 5 6 7 8 9
. , ; ? ! ' ( ) - @ / :

GEHE INS INTERNET

ESCAPE

SENDE

SENDE

36

54

| A | 2 2 |
| B | 2 2 2 |
| C | 2 2 2 2 |
| D | 3 3 |

S

50  48

P

40

O  46  A  44
        A'  44
38      A"  44

30
30
30

34  32
26
28

54

| A | 1 1 |
| B | 1 1 1 |
| C | 2 2 |
| D | 2 2 2 |

S

50  48

P

40

O  46  A  44
        A'  44
38      A"  44

30
30
30

34  32
26
28

54

| A | ⇧ a |
| B | ⇧ b |
| C | ⇧ c |
| D | ⇧ d |

S

50  48

P

40

O  46  A  44
        A'  44
38      A"  44

30
30
30

34  32
26
28

Fig. 3

10

Fig. 4

**Europäisches Patentamt**

**EUROPÄISCHER RECHERCHENBERICHT**

Nummer der Anmeldung

EP 05 02 0934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TURAN J ET AL: "Design web-controlled multimedia laboratory" ELECTRONICS IN MARINE, 2004. PROCEEDINGS ELMAR 2004. 46TH INTERNATIONAL SYMPOSIUM ZADAR, CROATIA 16-18 JUNE 2004, PISCATAWAY, NJ, USA,IEEE, 16. Juni 2004 (2004-06-16), Seiten 154-159, XP010740011 ISBN: 953-7044-02-5 * Zusammenfassung * * Seite 154, Zeile 9 - Seite 156, Absatz 3 * * Abbildungen 1,2 * * Seite 157, Absatz 4 - Seite 158, Absatz 5 * ----- | 1,13-20 | G06F9/46 G06F11/22 |
| X | OVERSTREET J W ET AL: "Internet-based client/server virtual instrument designs for real-time remote-access control engineering laboratory" AMERICAN CONTROL CONFERENCE, 1999. PROCEEDINGS OF THE 1999 SAN DIEGO, CA, USA 2-4 JUNE 1999, PISCATAWAY, NJ, USA,IEEE, US, Bd. 2, 2. Juni 1999 (1999-06-02), Seiten 1472-1476, XP010344951 ISBN: 0-7803-4990-3 * Seite 1472, linke Spalte, Zeile 1 - rechte Spalte, Zeile 2 * * Seite 1472, rechte Spalte, letzte Zeile - Seite 1473, linke Spalte, Zeile 22 * * Seite 1474, linke Spalte, Zeile 19 - rechte Spalte, Zeile 2 * ----- -/-- | 1,13-20 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 20. Februar 2006 | Skomorowski, M |

EPO FORM 1503 03.82 (P04C03)

**Europäisches Patentamt**

## EUROPÄISCHER RECHERCHENBERICHT

Nummer der Anmeldung

EP 05 02 0934

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/04427 A (UNITED TECHNOLOGY PTY. LTD; NGO, GET, SEN; PARSONS, EWAN) 27. Januar 2000 (2000-01-27) * Zusammenfassung * * Seite 1, Zeile 34 - Seite 4, Zeile 15 * * Seite 10, Zeile 24 - Seite 14, Zeile 27 * ----- | 1,13-20 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Februar 2006 | Skomorowski, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 02 0934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2006

| Im Recherchenbericht angeführtes Patentdokument | Datum der Veröffentlichung | Mitglied(er) der Patentfamilie | | Datum der Veröffentlichung |
|---|---|---|---|---|
| WO 0004427     A | 27-01-2000 | AT | 295558 T | 15-05-2005 |
| | | CA | 2337875 A1 | 27-01-2000 |
| | | CN | 1318161 A | 17-10-2001 |
| | | DE | 69925274 D1 | 16-06-2005 |
| | | EP | 1097409 A1 | 09-05-2001 |
| | | GB | 2354345 A | 21-03-2001 |
| | | JP | 2002520965 T | 09-07-2002 |
| | | ZA | 200101326 A | 16-10-2002 |

EPO FORM P0461

Für nähere Einzelheiten zu diesem Anhang : siehe Amtsblatt des Europäischen Patentamts, Nr.12/82